# EUROPÄISCHE PATENTANMELDUNG

(11) **EP 1 469 002 A1**
(43) Veröffentlichungstag der Anmeldung: **20.10.2004**
(21) Anmeldenummer: 04003766.5
(22) Anmeldetag: 19.02.2004
(51) Int. Cl.: C07F 7/18

(54) **Verfahren zur Stabilisierung ungesättigter Organosiliziumverbindungen**

(30) Priorität: 27.02.2003 DE 10308579
(71) Anmelder: Wacker-Chemie GmbH, 81737 München (DE)
(72) Erfinder: Pfeiffer, Jürgen, Dr., 84489 Burghausen (DE)
(74) Vertreter: Gössmann, Christoph

(57) **Zusammenfassung**

Verfahren zur Stabilisierung von ungesättigte Gruppen aufweisenden Organosiliciumverbindungen der Formel II

H₂C=C(R⁴)[C(O)O]_{w}(O)ₓ-(R⁵)_{y}-Si(R⁶)_{z}(OR⁷)_{3-z} II,

während der Herstellung und/oder Destillation und/oder Lagerung, wobei R⁴ ein Wasserstoffatom oder einen linearen oder verzweigten Kohlenwasserstoffrest mit 1-10 Kohlenstoffatomen darstellt, R⁵ einen linearen, zyklischen oder verzweigten Kohlenwasserstoffrest mit 1-40 Kohlenstoffatomen darstellt, R⁶ und R⁷ lineare, zyklische oder verzweigte Kohlenwasserstoffreste mit 1-10 Kohlenstoffatomen bedeuten und w die Werte 0 oder 1, x die Werte 0 oder 1, y die Werte 0 oder 1 und z die Werte 0, 1 oder 2 annehmen können, wobei w und x nicht beide gleichzeitig 1 sein dürfen, wobei die Verbindungen der Formel II erhalten wurden durch Umsetzung eines Halogenalkylsilans mit einem Salz einer ungesättigten organischen Säure, mit Verbindungen der allgemeinen Formel I 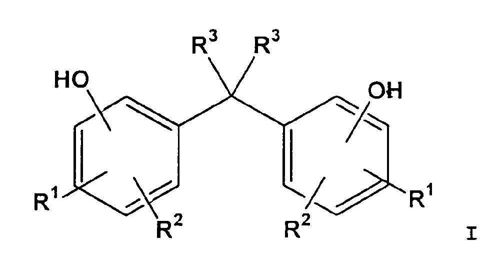 wobei R¹ und R² gleiche oder verschiedene lineare oder verzweigte Alkylketten mit 1-20 Kohlenstoffatomen bedeuten und die Reste R³ gleiche oder verschiedene Substituenten, ausgewählt aus den Gruppen Wasserstoff oder lineare oder verzweigte Alkylreste mit 1 - 20 Kohlenstoffatomen, darstellen.

## Beschreibung

Die Erfindung betrifft ein Verfahren zur Stabilisierung von ungesättigten Organosiliciumverbindungen.

Siliziumorganische Verbindungen mit ungesättigten organischen funktionellen Gruppen, wie z.B. Vinyl-, Acryl- oder Methacrylgruppen finden weitverbreitete Anwendung als Haftvermittler zwischen anorganischen und organischen Materialen, so z.B. in Schlichten für Glasfasern, als Quervernetzer in organischen Polymeren, oder auch zur Behandlung von Füllstoffen.
Herstellungsverfahren für derartige Verbindungen umfassen z.B. die durch Metallverbindungen katalysierte Reaktion zwischen Silanen mit SiH-Bindungen und (ggf. mehrfach) ungesättigten organischen Verbindungen (im Folgenden auch als Hydrosilylierung bezeichnet), oder auch die Umsetzung von halogenalkylsubstituierten Alkoxysilanen mit Salzen der Acryl- oder Methacrylsäure (im Folgenden auch als Nucleophile Substitution bezeichnet). All diesen Prozessen ist gemeinsam, dass sie exotherm unter erhöhten Temperaturen ablaufen. Dadurch besteht während der Reaktion die Gefahr einer Polymerisation der Produkte durch Reaktion der ungesättigten organischen Gruppe, wodurch Produkt verloren geht und verwendete Reaktionsapparaturen aufwendig gereinigt werden müssen. Darüber hinaus werden die ungesättigte organische Gruppen tragenden Silane zumeist noch durch Destillation gereinigt,
wobei durch die dazu notwendige thermische Belastung ebenfalls eine erhebliche Polymerisationsgefahr besteht. Schließlich besteht auch während der Lagerung dieser Verbindungen die Gefahr der Polymerisation.
Zahlreiche Verfahren zur Verhinderung der Polymerisation von ungesättigte organische Gruppen tragenden siliziumorganischen Verbindungen beinhalten die Verwendungen von so genannten Radikalpolymerisations-Inhibitoren. Diese Verbindungen werden verwendet während der Herstellung - unabhängig vom Herstellungsweg - während der destillativen Aufarbeitung und während der Lagerung der ungesättigte Gruppen tragenden Organosiliziumverbindungen.
In US 5,145,979 wird eine Mischung aus einem sterisch gehinderten Phenol, einem aromatischen Amin und/oder einem Alkylamin bei der Herstellung ungesättigte organische Gruppen aufweisender Organosiliziumverbindungen durch Hydrosilylierung als stabilisierend beschrieben. In DE 4 437 667 A1, EP 0 483 479 A1 oder auch EP 0 483 480 A1 wird die Verwendung von *N,N'*-Diphenyl-p-phenylendiamin ("DPPA") zur Stabilisierung während der Herstellung ungesättigter Organosiliziumverbindungen durch nucleophile Substitution beschrieben.
In EP 1 004 587 A2 wird die Kombination zweier unterschiedlicher Polymerisationsinhibitoren, bestehend aus einer Verbindung aus der Klasse von *N,N'*-disubstituierten *p*-Phenylendiaminen und einer Verbindung aus der Klasse der 2,6-Di-tert.-butyl-4-alkyl-phenole, beschrieben.
In EP 708 081 B1 wird dagegen die Verwendung von N,N'-disubstituierten p-Chinodiiminen, allein oder in Kombination mit anderen, stabilisierend wirkenden Verbindungen, bei der Herstellung von ungesättige Gruppen aufweisenden Organosiliziumverbindungen durch nucleophile Substitution, beschrieben.
Allen Verfahren, in denen mehrere Inhibitoren eingesetzt werden, ist gemeinsam, daß einer der eingesetzten Polymerisationsinhibitoren einen sehr hohen Siedepunkt aufweist und damit den Sumpf stabilisiert, während ein weiterer ähnlich flüchtig ist, wie das zu destillierende Produkt und damit die Gasphase stabilisiert. Allerdings führt der Einsatz von Aminen wie *N,N*'-Diphenyl-*p*-phenylendiamin oder aminogruppenhaltigen sterisch gehinderten Phenolen, wie z.B. 2,6-Dialkyl-4-N,N-dialkylaminomethylphenolen unter den thermischen Berdingungen der Destillation zur Bildung flüchtiger aminischer Verunreinigungen, die dazu führen, daß die destillierten Produkte gelb gefärbt sind und einen unangenehmen, an.Fisch erinnernden Geruch aufweisen.
Den beschriebenen Verfahren ist darüber hinaus der.Nachteil gemeinsam, dass relativ große Mengen an stabilisierender Verbindung(en) zugesetzt werden müssen, dass diese Verbindungen oft recht teuer sind und dass die beschriebenen Verfahren oftmals - wie ein in Berührung bringen mit einem Sauerstoff enthaltenden Gasgemisch - sicherheitstechnisch als kritisch zu beurteilen sind. Darüber hinaus besteht bei den meisten beschriebenen Verbindungen trotz eines auf ungesättigte Organosiliziumverbindungen ausgeübten stabilisierenden Effektes eine Restgefahr, dass die ungesättigte Organosiliziumverbindung polymerisiert und dadurch verloren wird.

Aufgabe der vorliegenden Erfindung war es deshalb, Verbindungen zu finden, die schon in geringster Menge hocheffizient die Polymerisation von ungesättigten Organosiliziumverbindungen verhindern und damit ressourcenschonend sind, ohne durch Bildung färbender oder geruchtragender Verbindungen die Qualität des Produktes zu beeinflussen. Insbesondere sollte diese Aufgabe gelöst werden für die Destillation von Rohreaktionsmischungen von ungesättigte Gruppen aufweisenden Organosiliziumverbindungen, die erhalten wurden durch Umsetzung von Halogenalkylsilanen mit Salzen ungesättigter organischer Säuren. Diese Aufgaben konnten mit der vorliegenden Erfindung gelöst werden.

Überraschenderweise wurde gefunden, daß die Verwendung von Verbindungen der allgemeinen Formel I 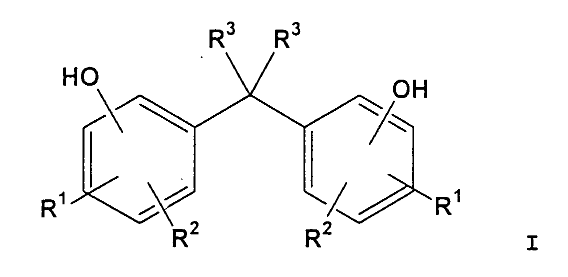 zur Stabilisierung von ungesättigten, siliziumhaltigen Verbindungen während der Herstellung und/oder Destillation und/oder Lagerung, wobei die ungesättigte Gruppen tragenden Organosiliziumverbindungen erhalten werden durch die Reaktion von Halogenalkylsilanen mit Salzen ungesättigter Säuren, hervorragend geeignet sind und ohne Anwesenheit weiterer Stabilisatoren zu hochreinen, farblosen und bis auf den Eigengeruch geruchlosen Produkten führt.

Gegenstand der Erfindung ist ein Verfahren zur Stabilisierung von ungesättigte Gruppen aufweisenden Organosiliciumverbindungen der Formel **II**

H₂C=C (R⁴) [C(O)O]_{w}(O)ₓ-(R⁵)_{y}-Si(R⁶)_{z}(OR⁷)_{3-z} **II,**

während der Herstellung und/oder Destillation und/oder Lagerung, wobei R⁴ ein Wasserstoffatom oder einen linearen oder verzweigten Kohlenwasserstoffrest mit 1-10 Kohlenstoffatomen darstellt, R⁵ einen linearen, zyklischen oder verzweigten Kohlenwasserstoffrest mit 1-40 Kohlenstoffatomen darstellt, der gegebenenfalls ein oder mehrere Heteroatome, ausgewählt aus den Elementen Stickstoff, Sauerstoff, Schwefel oder Phosphor, enthalten kann, R⁶ und R⁷ lineare, zyklische oder verzweigte Kohlenwasserstoffreste mit 1-10 Kohlenstoffatomen bedeuten und w die Werte 0 oder 1, x die Werte 0 oder 1, y die Werte 0 oder 1 und z die Werte 0, 1 oder 2 annehmen können, wobei w und x nicht beide gleichzeitig 1 sein dürfen, wobei die Verbindungen der Formel **II** erhalten wurden durch Umsetzung eines Halogenalkylsilans mit einem Salz einer ungesättigten organischen Säure, mit Verbindungen der allgemeinen Formel **I** 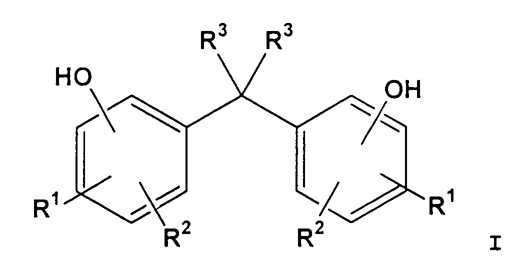 wobei R¹ und R² gleiche oder verschiedene lineare oder verzweigte Alkylketten mit 1-20 Kohlenstoffatomen bedeuten und die Reste R³ gleiche oder verschiedene Substituenten, ausgewählt aus den Gruppen Wasserstoff oder lineare oder verzweigte Alkylreste mit 1 - 20 Kohlenstoffatomen, darstellen.

Dabei bedeuten R¹ und R² in Formel **I** gleiche oder verschiedene lineare oder verzweigte Alkylketten mit 1-20 Kohlenstoffatomen, die gegebenenfalls Heteroatome wie Sauerstoff, Schwefel, Phosphor oder Stickstoff enthalten können. Bevorzugt sind verzweigte Alkylreste wie der Isopropyl-, iso-Butyl- oder der *tert*.-Butylrest, besonders bevorzugt ist der *tert*.-Butylrest. Die Reste R¹, R² und die Hydroxygruppe können in den erfindungsgemäßen Verbindungen der Formel **I** beliebige Positionen am aromatischen Kern einnehmen, bevorzugt befinden sich die Hydroxygruppe und die Methylenbrücke in *ortho*- oder *para*-Position zueinander und die Reste R¹ und R² befinden sich bevorzugt in *meta*- oder *para*-Position zueinander.
Bei den Resten R³ handelt es sich um gleiche oder verschiedene Substituenten, ausgewählt aus den Gruppen Wasserstoff oder lineare oder verzweigte Alkylreste mit 1 - 20 Kohlenstoffatomen, die gesättigt oder ungesättigt und/oder mit Heteroatomen substituiert sein können. Bevorzugt handelt es sich bei den Resten R³ um Wasserstoff oder um lineare oder verzweigte Kohlenwasserstoffreste mit 1-4 Kohlenstoffatomen und besonders bevorzugt um Wasserstoff.
Beispiele für die erfindungsgemäß einsetzbaren Verbindungen sind 4,4'-Methylen-bis-(2,6-di-tert.-butylphenol), 2,2'-Methylen-bis-(3,5-di-tert.-butylphenol), 4,4'-Methylen-bis-(2,6-di-isopropylphenol) und 2,2'-Methylen-bis-(3,5-di-isopropylphenol). Insbesondere bevorzugt ist die Verwendung von 4,4'-Methylen-bis-(2,6-di-tert.-butylphenol), erhältlich unter den Handelsbezeichnungen Ionox 220 (Degussa AG) und Ralox 02 S (Raschig GmbH).

Die erfindungsgemäßen Verbindungen sind besonders geeignet zur Stabilisierung ungesättigter Organosiliziumverbindungen der Formel

H₂C=C(R⁴) [C(O)O]_{w}(O)ₓ-(R⁵)_{y}-Si(R⁶)_{z}(OR⁷)_{3-z} **II,**

wobei R⁴ ein Wasserstoffatom oder einen linearen oder verzweigten Kohlenwasserstoffrest mit 1-10 Kohlenstoffatomen darstellt, R⁵ einen linearen, zyklischen oder verzweigten Kohlenwasserstoffrest mit 1-40 Kohlenstoffatomen darstellt, der gegebenenfalls ein oder mehrere Heteroatome, ausgewählt aus den Elementen Stickstoff, Sauerstoff, Schwefel oder Phosphor enthalten kann, R⁶ und R⁷ lineare, zyklische oder verzweigte Kohlenwasserstoffreste mit 1-10 Kohlenstoffatomen bedeuten und w die Werte 0 oder 1, x die Werte 0 oder 1, y die Werte 0 oder 1 und z die Werte 0, 1 oder 2 annehmen können, wobei w und x nicht beide gleichzeitig 1 sein dürfen.

Beispiele für ungesättigte Gruppen aufweisende Organosiliziumverbindungen der Formel **II,** die mit den erfindungsgemäßen Verbindungen der Formel **I** stabilisiert werden können, sind Acrylsilane, wie z.B. Acryloxymethyltrimethoxysilan, Acryloxymethyltriethoxysilan, Acryloxymethyltriphenyloxysilan, Acryloxymethyltriisopropoxysilan, Acryloxymethyltris(2-methoxyethoxy)silan, Acryloxymethyl(methyl)dimethoxysilan, Acryloxymethyl(methyl)diethoxysilan, Acryloxymethyl(methyl)diphenyloxysilan, Acryloxymethyl(methyl)diisopropoxysilan, Acryloxymethyl(methyl)bis(2-methoxyethoxy)silan, Acryloxymethyl(dimethyl)methoxysilan, Acryloxymethyl(dimethyl)ethoxysilan, Acryloxymethyl(dimethyl)phenyloxysilan, Acryloxymethyl(dimethyl)isopropoxysilan, Acryloxymethyl(dimethyl)(2-methoxyethoxy)silan, 3-Acryloxypropyltrimethoxysilan, 3-Acryloxypropyltriethoxysilan, 3-Acryloxypropyltriphenyloxysilan, 3-Acryloxypropyltriisopropoxysilan, 3-Acryloxypropyltris(2-methoxyethoxy)silan, 3-Acryloxypropyl(methyl)dimethoxysilan, 3-Acryloxypropyl(methyl)diethoxysilan, 3-Acryloxypropyl(methyl)diphenyloxysilan, 3-Acryloxypropyl(methyl)diisopropoxysilan, 3-Acryloxypropyl(methyl)bis(2-methoxyethoxy)silan, 3-Acryloxypropyl(dimethyl)methoxysilan, 3-Acryloxypropyl(dimethyl)ethoxysilan, 3-Acryloxypropyl(dimethyl)phenyloxysilan, 3-Acryloxypropyl(dimethyl)isopropoxysilan, 3-Acryloxypropyl(dimethyl)(2-methoxyethoxy)silan oder auch Methacrylsilane wie z.B. Methacryloxymethyltrimethoxysilan, Methacryloxymethyltriethoxysilan, Methacryloxymethyltriphenyloxysilan, Methacryloxymethyltriisopropoxysilan, Methacryloxymethyltris(2-methoxyethoxy)silan, Methacryloxymethyl(methyl)dimethoxysilan, Methacryloxymethyl(methyl)diethoxysilan, Methacryloxymethyl(methyl)diphenyloxysilan, Methacryloxymethyl(methyl)diisopropoxysilan, Methacryloxymethyl(methyl)bis(2-methoxyethoxy)silan, Methacryloxymethyl(dimethyl)methoxysilan, Methacryloxymethyl(dimethyl)ethoxysilan, Methacryloxymethyl(dimethyl)phenyloxysilan, Methacryloxymethyl(dimethyl)isopropoxysilan, Methacryloxymethyl(dimethyl)(2-methoxyethoxy)silan, 3-Methacryloxypropyltrimethoxysilan, 3-Methacryloxypropyltriethoxysilan, 3-Methacryloxypropyltriphenyloxysilan, 3-Methacryloxypropyltriisopropoxysilan, 3-Methacryloxypropyltris(2-methoxyethoxy)silan, 3-Methacryloxypropyl(methyl)dimethoxysilan, 3-Methacryloxypropyl(methyl)diethoxysilan, 3-Methacryloxypropyl(methyl)diphenyloxysilan, 3-Methacryloxypropyl(methyl)diisopropoxysilan, 3-Methacryloxypropyl(methyl)bis(2-methoxyethoxy)silan, 3-Methacryloxypropyl(dimethyl)methoxysilan, 3-Methacryloxypropyl(dimethyl)ethoxysilan, 3-Methacryloxypropyl(dimethyl)phenyloxysilan, 3-Methacryloxypropyl(dimethyl)isopropoxysilan und 3-Methacryloxypropyl(dimethyl)(2-methoxyethoxy)silan.

Die erfindungsgemäß verwendbaren Verbindungen der Formel **I** können zur Stabilisierung von ungesättigten Organosiliziumverbindungen der Formel **II** während deren Herstellung, einer destillativen Reinigung oder auch zur Stabilisierung während einer länger (Monate oder Jahre) dauernden Lagerung eingesetzt werden.

Die destillative Reinigung eines Rohgemisches einer ungesättigte Gruppen aufweisenden Organosiliziumverbindung der Formel **II** unter Verwendung von Inhibitoren der allgemeinen Formel **I** kann nach allgemein bekannten Methoden erfolgen, z.B. durch Batch-Destillation aus einem Rührwerk mit oder ohne Rektifikationskolonne oder auch durch Kurzwegdestillation z.B. unter Verwendung eines Dünnschicht- oder Fallfilmverdampfers.

Die erfindungsgemäß verwendbaren Verbindungen der Formel **I** können in beliebiger Menge eingesetzt werden, vorausgesetzt, diese Menge ist ausreichend, um die Polymerisation der ungesättigten Organosiliziumverbindung der Formel **II** zu verhindern. Bevorzugt werden die Verbindungen der Formel **I** in einer Menge von 0,001 bis 1 Gewichtsprozent und besonders bevorzugt in einer Menge von 0,005 - 0,5 Gewichtsprozent bezogen auf die ungesättigte Gruppen tragende organische Siliziumverbindung der Formel **II** eingesetzt.

Die erfindungsgemäßen Verbindungen der Formel **I** können entweder allein oder auch in Kombination mit einer oder mehreren weiteren Verbindungen in beliebiger Menge eingesetzt werden, von denen bekannt ist, dass sie die Polymerisation von ungesättigten Organosiliziumverbindungen der Formel **II** verhindern können. Beispiele für solche Verbindungen sind aromatische oder aliphatische Amine, wie z.B. *N,N*-Diphenyl-*p*-phenylendiamin, oder andere sterisch gehinderte Phenole wie 2,6-Di-*tert*.-butyl-4-methylphenol, oder aromatische Ether Chinone, wie z.B. Hydrochinonmonomethylether oder Hydrochinon, oder organische Radikale wie z.B. 2,2,6,6-Tetramethylpiperidinyloxid ("TEMPO").
Bevorzugt werden diese Verbindungen in der gleichen Menge eingesetzt wie die Verbindungen der Formel **I**.
Der Einsatz der Verbindungen der Formel **I** allein ist besonders bevorzugt.

Die Herstellung der ungesättigte Gruppen aufweisenden ungesättigten Organosiliziumverbindungen der Formel **II** unter Verwendung der stabilisierenden Verbindungen der Formel **I** erfolgt durch Umsetzung einer Halogenalkylsiliziumverbindung mit dem Salz einer ungesättigten organischen Säure, ggf. in Anwesenheit eines Phasentransferkatalysators. Die Herstellung kann bei einer Temperatur von 80-160 °C erfolgen, bevorzugt bei 90-150 °C und besonders bevorzugt bei 100-120 °C. Die Herstellung kann bei einem beliebigen Druck erfolgen, bevorzugt bei 0,1-3 bar und besonders bevorzugt bei 250-1013 mbar.

### Beispiel 1:

Durch 4 Stunden Erhitzen von Kaliummethacrylat mit 3-Chlorpropyltrimethoxysilan (molares Verhältnis 1,05:1) in Anwesenheit von 1 % nBu₄PCl, 5% Aceton und 500 ppm 4,4'-Methylen-bis-(2,6-di-tert.-butylphenol) auf 115 °C wurde nach Filtration ein Rohreaktionsgemisch erhalten, welches zusammengesetzt war aus 5 % Aceton, 94 % 3-Methacryloxypropyltrimethoxysilan und 1 % entsprechendem Disiloxan.
Nach Entfernen des Acetons unter reduziertem Druck führte die Destillation über eine Destillationsbrücke bei einem Blasendruck von 3 mbar (Siedetemperatur 103 °C) zu 3-Methacryloxypropyltrimethoxysilan mit einer Reinheit von 99,6 %. Das Produkt zeigte eine APHA-Farbzahl von 3 und wies lediglich einen leichten Eigengeruch auf. Weder in der Destillationsblase, noch in der Destillationsbrücke oder der Vorlage wurde polymeres Material beobachtet. Die Destillationsausbeute betrug 95 %.

### Beispiel 2:

Ein wie in Beispiel 1 erhaltenes Rohreaktionsgemisch von 3-Methacryloxypropyltrimethoxysilan wurde nach Entfernung des Acetons über 12 Stunden mit einer Dosierrate von 100 ml/h über eine Kurzwegdestillation vom Typ Leybold-Heraeus KD 3 übergetrieben. Durch Einstellung von 140 °C und 4 mbar wurde ein Ablauf von etwa 5 % eingestellt. Wiederum wurde 3-Methacryloxypropylsilan mit einer Reinheit von 99,5 % erhalten, welches geruchlos war und eine APHA-Farbzahl von 6 aufwies. Wiederum wurden im Destillationsapparat, in der Produktvorlage und im Sumpf (Ablauf) keine polymeren Anteile beobachtet.

### Beispiel 3 (nicht erfindungsgemäß) :

Wie in Beispiel 1 wurde ein Rohreaktionsgemisch von 3-Methacryloxypropylsilan erhalten, mit dem Unterschied, daß anstelle von 4,4'-Methylen-bis-(2,6-di-tert.-butylphenol) 1000 ppm 2,6-Di-tert-butyl-4-methyl-phenol eingesetzt wurden. 1 kg dieses Rohproduktes wurde nach Entfernung des Acetons über eine Destillationsbrücke bei 3 mbar (Siedetemperatur 103 °C) übergetrieben. Nach Erhalt von 30 % des zu erwartenden Produktes wurde die Destillation abgebrochen, da der Destillationssumpf geliert war. Das erhaltene Produkt war von 99.3 %iger Reinheit, zeigte eine APHA-Farbzahl von 15 und wies im GC eine Gehalt von 0,11 % 2,6-Di-tert-butyl-4-methyl-phenol auf. Dieses Beispiel zeigt, daß die hohe Flüchtigkeit des nicht erfindungsgemäßen Polymerisationsinhibitors zu Produktverlust führt.

### Beispiel 4 (nicht erfindungsgemäß)

Wie in Beispiel 1 wurde ein Rohreaktionsgemisch von 3-Methacryloxypropylsilan erhalten, mit dem Unterschied, daß anstelle von 4,4'-Methylen-bis-(2,6-di-tert.-butylphenol) 1000 ppm 2,6-Di-tert-butyl-4-methyl-phenol und 500 ppm *N,N'*-Diphenyl-p-phenylendiamin eingesetzt wurden.
1 kg dieses Rohproduktes wurde nach Entfernung des Acetons über eine Destillationsbrücke bei 3 mbar (Siedetemperatur 103 °C) übergetrieben. Nach Erhalt von 80 % des zu erwartenden Produktes wurde die Destillation abgebrochen, da der Destillationssumpf geliert war. Das erhaltene Produkt war von 99.3 %iger Reinheit, zeigte eine APHA-Farbzahl von 35 und wies im GC eine Gehalt von 0,09 % 2,6-Di-tert-butyl-4-methyl-phenol auf. Daneben zeigte das Produkt einen unangenehmen, fischartigen Geruch. Dieses Beispiel zeigt, daß neben der Flüchtigkeit des einen Polymerisationsinhibitors auch der Einsatz eines aminischen, nicht-flüchtigen Polymerisationsinhibitors durch Verfärbung des Produktes und einen unangenehmen Geruch von Nachteil ist.

### Beispiel 5 (nicht erfindungsgemäß):

Wie in Beispiel 1 wurde ein Rohreaktionsgemisch von 3-Methacryloxypropylsilan erhalten, mit dem Unterschied, daß anstelle von 4,4'-Methylen-bis-(2,6-di-tert.-butylphenol) 1000 ppm 2,6-Di-tert-butyl-4-(N,N-dimethylaminomethyl)-phenol eingesetzt wurde.
1 kg dieses Rohproduktes wurde nach Entfernung des Acetons über eine Destillationsbrücke bei 3 mbar (Siedetemperatur 103 °C) übergetrieben. Das erhaltene Produkt war von 99.5 %iger Reinheit, zeigte eine APHA-Farbzahl von 40 und wies einen unangenehmen, fischartigen Geruch auf. Dieses Beispiel zeigt, daß der Einsatz eines aminhaltigen phenolischen Polymerisationsinhibitors durch Verfärbung des Produktes und einen unangenehmen Geruch von Nachteil ist.

In Tabelle 1 sind die Beobachtungen bei der Destillation weiterer Rohreaktionsgemische von (Meth)acryloxyalkylsilanen, die jeweils durch die Umsetzung entsprechender Halogenalkylsilane mit (Meth)Acrylsäuresalzen erhalten wurden, zusammengefaßt.

**Tabelle 1**

| **Nr** | **Zielprodukt** | **Inhibitor**^{**a)**} | **Dest.** ^{**b)**} | **Reinheit** | **Geruc h**^{**c)**} | **AP HA** |
|---|---|---|---|---|---|---|
| 6 | Methacryloxymethyltrimethoxysilan^{d)} | 500 ppm Ionox 220 | DB | 99,2 | N | 5 |
| 7 | Methacryloxymethyltrimethoxysilan^{d)} | 500 ppm Ionox 220 | DSV | 99,1 | N | 8 |
| 8^{e)} | Methacryloxymethyltrimethoxysilan^{d)} | 1000 ppm BHT + 500 ppm DPPA | DB | 99,4^{f)} | A | 28 |
| 9^{e)} | Methacryloxymethyltrimethoxysilan^{d)} | 1000 ppm BHT + 500 ppm DPPA | DSV | 98,7^{g)} | A | 35 |
| 10^{e)} | Methacryloxymethyltrimethoxysilan ^{b)} | 1000 ppm Ethanox 703 | DB | 98,5 | A | 40 |
| 11^{e)} | Methacryloxymethyltrimethoxysilan^{b)} | 1000 ppm Ethanox 703 | DSV | 98,4 | A | 45 |
| 12 | Acryloxymethyl(dimethyl)methoxysilan^{h)} | 500 ppm Ionox 220 | DB | 98,9 | N | 8 |
| 13 | Acryloxymethyl(dimethyl)methoxysilan^{h)} | 500 ppm Ionox 220 | DSV | 98,5 | N | 12 |
| 14^{e)} | Acryloxymethyl(dimethyl)methoxysilan^{h)} | 1000 ppm BHT + 500 ppm DPPA | DB | 98,9ⁱ⁾ | A | 28 |
| 15^{e)} | Acryloxymethyl(dimethyl)methoxysilan^{h)} | 1000 ppm BHT + 500 ppm DPPA | DSV | 98,1^{g)} | A | 33 |
| 16 | Methacryloxymethyl( dimethoxy)methylsilan^{j)} | 500 ppm Ionox 220 | DB | 98,7 | N | 5 |
| 17 | Methacryloxymethyl( dimethoxy)methylsilan^{j)} | 500 ppm Ionox 220 | DSV | 98,3 | N | 14 |
| 18^{e)} | Methacryloxymethyl( dimethoxy)methylsilan^{j)} | 1000 ppm Ethanox 703 | DB | 99,3^{k)} | A | 35 |
| 19^{e)} | Methacryloxymethyl( dimethoxy)methylsilan^{j}) | 1000 ppm Ethanox 703 | DSV | 98,7^{g)} | A | 38 |
| 20 | Methacryloxymethyl(diethoxy)methylsil an^{l)} | 500 ppm Ionox 220 | DSV | 98,1 | N | 12 |
| 21^{e)} | Methacryloxymethyl(diethoxy)methylsil an^{l)} | 1000 ppm BHT + 500 ppm DPPA | DSV | 98,1^{g)} | A | 26 |
| 22^{e)} | Methacryloxymethyl(diethoxy)methylsil an^{l)} | 1000 ppm Ethanox 703 | DSV | 98,2^{g)} | A | 36 |

| | | | | | | |
|---|---|---|---|---|---|---|
| ^{a)} Ionox 220: 4,4'-Methylen-bis-(2,6-di-tert-butylphenol), BHT: 2,6-Di-tert-butyl-4-methylphenol, DPPA: *N,N'*-Diphenyl-*p*-phenylen-diamin, Ethanox 703: 2,6-Di-tert-butyl-4-(N,N-dimethylaminomethyl)phenol | | | | | | |
| ^{b)} DB: Destillationsbrücke; DSV: Dünnschichtverdampfer | | | | | | |
| ^{c)} N: Neutraler Geruch; A: Geruch nach Amin | | | | | | |
| ^{d)} Erhalten aus Kaliummethacrylat + Chlormethyl-trimethoxysilan | | | | | | |
| ^{e)} Nicht erfindungsgemäßes Beispiel | | | | | | |
| ^{f)} Nach Erhalt von 20 % Destillat ist Destillationssumpf geliert. | | | | | | |
| ^{g)} Abbruch nach Bildung von Polymer im Dünnschichtverdampfer. | | | | | | |
| ^{h)} Hergestellt aus Triethylammonium-acrylat + Chlomethyl(dimethyl)-methoxysilan | | | | | | |
| ⁱ⁾ Nach Erhalt von 40 % Destillat ist Destillationssumpf geliert. | | | | | | |
| ^{j)} Hergestellt aus Kaliummethacrylat + Chlormethyl(dimethoxy)methylsilan | | | | | | |
| ^{k)} Nach Erhalt von 70 % Destillat ist Destillationssumpf geliert. | | | | | | |
| ^{l)} Hergestellt aus Kaliummethacrylat + Chlormethyl(diethoxy)methylsilan | | | | | | |

### Stabilisierungseffizienz:

Um die Effizienz der erfindungsgemäßen Verbindungen der Formel **I** zur Stabilisierung von ungesättigte Gruppen tragenden Organosiliziumverbindungen der Formel II zu untersuchen, wurden unstabilisierte Rohansätze aus Synthesen verschiedener ungesättigter Organosiliziumverbindungen mit verschiedenen Stabilisator(-Kombination-)en sowohl an Luft als auch unter Argon versetzt und geprüft, nach wie langer Zeit die Rohmischungen bei 140 bzw. 150 °C unter Polymerisation gelieren.
Die Ergebnisse sind in den folgenden Tabellen 2 und 3 zusammengefasst:

**Tabelle 2:**

| Stabilisierung von 3-Methacryloxypropyltrimethoxysilan (Rohansatz wie in Beispiel 1, allerdings ohne Stabilisator hergestellt) unter Argon. | | |
|---|---|---|
| Nr. | Stabilisator | Ergebnis (geliert nach) |
| 23^{a)} | 0,025 % 4,4-Methylen-bis(2,6-di-tert.-butylphenol) | 32 h bei 150 °C |
| 24^{b)} | 0.05 % 2,6-Di-*tert*.-butyl-4-*N*-dimethylaminomethylen-phenol | 10 h bei 150 °C |
| 25^{b)} | 0.05 % 2,6-Di-tert.-butyl-4-methyl-phenol | 4 h bei 150 °C |
| 26^{b)} | 0.05 % 2,6-Di-tert.-butyl-4-*N*-dimethylaminomethylen-phenol + 0,05 % *N*,*N'*-Diphenyl-*p*-phenylen-diamin | 18 h bei 150 °C |
| 27^{b)} | 0.05 % 2,6-Di-tert.-butyl-4-methyl-phenol + 0,05 % *N,N'*-Diphenyl-*p*-phenylen-diamin | 12 h bei 150 °C |

| | | |
|---|---|---|
| ^{a)} Erfindungsgemäß | | |
| ^{b)} Nicht erfindungsgemäß | | |

Aus dieser Tabelle geht klar hervor, dass die erfindungsgemäß verwendbaren Verbindungen der Formel **I** eine deutliche Verbesserung der thermischen Stabilität einer Rohlösung von 3-Methacryloxypropyltrimethoysilan bewirken, verglichen mit den bekannten Verbindungen 2,6-Di-tert.-butyl-4-*N*-dimethylaminomethylen-phenol und 2,6-Di-tert.-butyl-4-methylphenol, auch wenn diese zusammen mit einem weiteren Inhibitor eingesetzt werden.

Die Versuche 23 - 27 wurden bei 140°C unter einer Luftatmosphäre wiederholt. Die Ergebnisse sind in Tabelle 3 zusammengefasst.

**Tabelle 3:**

| Stabilisierung von 3-Methacryloxypropyltrimethoxysilan an Luft. | | |
|---|---|---|
| No. | Stabilisator | Ergebnis (geliert nach) |
| 28^{a)} | 0,025 % 4,4-Methylen-bis(2,6-di-tert butylphenol) | 72 h bei 140 °C |
| 29^{b)} | 0.05 % 2,6-Di-*tert*.-butyl-4-*N*-dimethylaminomethylen-phenol | 45 h bei 140 °C |
| 30^{b)} | 0.05 % 2,6-Di-tert.-butyl-4-methyl-phenol | 30 h bei 140 °C |
| 31^{b)} | 0.05 % 2,6-Di-*tert*.-butyl-4-*N*-dimethylaminomethylen-phenol + 0,05 % *N,N'*-Diphenyl-*p*-phenylen-diamin | 65 h bei 140 °C |
| 32^{b)} | 0.05 % 2,6-Di-tert.-butyl-4-methyl-phenol + 0,05 % *N,N'*-Diphenyl-*p*-phenylen-diamin | 42 h bei 150 °C |

| | | |
|---|---|---|
| ^{a)} Erfindungsgemäß | | |
| ^{b)} Nicht erfindungsgemäß | | |

Wieder zeigt sich, dass die erfindungsgemäß verwendbaren Verbindungen der allgemeinen Formel I die beste Stabilisierung bewirken.

Vorteile der Erfindung:
- Die notwendige Menge an Verbindung der Formel **I** zur Stabilisierung von ungesättigten (siliziumhaltigen) Verbindungen ist geringer, als dies bei bekannten Verbindungen der Fall ist.
- Der stabilisierende Effekt ist dauerhafter.
- Die deutlich verbesserte Qualität der Produkte der Formel **II** hinsichtlich Farbe und Geruch bei Einsatz der Verbindungen der Formel **I**

## Patentansprüche

1. Verfahren zur Stabilisierung von ungesättigte Gruppen aufweisenden Organosiliciumverbindungen der Formel **II**
H₂C=C(R⁴) [C(O)O]_{w}(O)ₓ-(R⁵)_{y}-Si(R⁶)_{z}(OR⁷)₃₋₇ **II,**
während der Herstellung und/oder Destillation und/oder Lagerung, wobei R⁴ ein Wasserstoffatom oder einen linearen oder verzweigten Kohlenwasserstoffrest mit 1-10 Kohlenstoffatomen darstellt, R⁵ einen linearen, zyklischen oder verzweigten Kohlenwasserstoffrest mit 1-40 Kohlenstoffatomen darstellt, der gegebenenfalls ein oder mehrere Heteroatome, ausgewählt aus den Elementen Stickstoff, Sauerstoff, Schwefel oder Phosphor, enthalten kann, R⁶ und R⁷ lineare, zyklische oder verzweigte Kohlenwasserstoffreste mit 1-10 Kohlenstoffatomen bedeuten und w die Werte 0 oder 1, x die Werte 0 oder 1, y die Werte 0 oder 1 und z die Werte 0, 1 oder 2 annehmen können, wobei w und x nicht beide gleichzeitig 1 sein dürfen, wobei die Verbindungen der Formel **II** erhalten wurden durch Umsetzung eines Halogenalkylsilans mit einem Salz einer ungesättigten organischen Säure, mit Verbindungen der allgemeinen Formel **I** 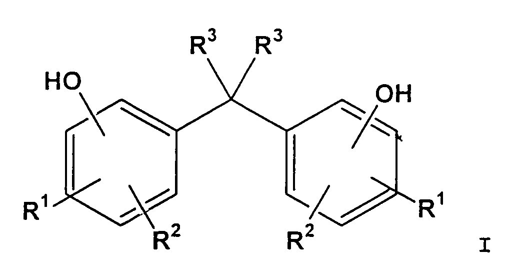 wobei R¹ und R² gleiche oder verschiedene lineare oder verzweigte Alkylketten mit 1-20 Kohlenstoffatomen bedeuten und die Reste R³ gleiche oder verschiedene Substituenten, ausgewählt aus den Gruppen Wasserstoff oder lineare oder verzweigte Alkylreste mit 1 - 20 Kohlenstoffatomen, darstellen.

2. Verfahren zur Stabilisierung von ungesättigte Gruppen aufweisenden Organosiliciumverbindungen der Formel II nach Anspruch 1, **dadurch gekennzeichnet, dass** es sich bei der Verbindung der Formel **I** um 4,4'-Methylen-bis-(2,6-di-tert.-butylphenol) handelt.

3. Verfahren zur Stabilisierung von ungesättigte Gruppen aufweisenden Organosiliciumverbindungen der Formel II nach Anspruch 1, **dadurch gekennzeichnet, dass** es sich bei der Verbindung der Formel **II** um 3-Methacryloxypropyltrimethoxysilan, 3-Methacryloxypropyl(dimethoxy)methylsilan, Methacryloxymethyltrimethoxysilan, Methacryloxymethyltriethoxysilan, Methacryloxymethyl(dimethoxy)methylsilan, Methacryloxymethyl(diethoxy)methylsilan, Methacryloxymethyl(dimethyl)methoxysilan, Methacryloxymethyl(dimethyl)ethoxysilan, oder die entsprechenden Acrylverbindungen handelt.

4. Verfahren gemäß Anspruch 1, **dadurch gekennzeichnet, dass** die Menge der eingesetzten stabilisierenden Verbindung der Formel **I** 0,005 - 1 Gewichtsprozent der organischen Siliziumverbindung der Formel **II** entspricht.
